# EUROPEAN PATENT APPLICATION

(11) **EP 4 299 453 A1**
(43) Date of publication of application: **03.01.2024**
(21) Application number: 22182550.8
(22) Date of filing: 01.07.2022
(51) Int. Cl.: B65B 25/04, B65B 35/16, B65B 35/18, B65B 35/24, B65B 43/54, B65B 5/10, B65B 43/48, B65B 43/52, B65B 43/59, B65B 57/14

(54) **MUSHROOM PACKAGING DEVICE AND METHOD OF PACKAGING MUSHROOMS USING THAT DEVICE**

(71) Applicant: Muzzroom bvba, 8770 Ingelmunster (BE)
(72) Inventor: The designation of the inventor has not yet been filed
(74) Representative: BiiP cvba

(57) **Abstract**

A method of packaging mushrooms comprising the steps of:
• Determining a mushroom cap area of mushrooms on a conveyor belt;
• Assigning a mushroom, based on its cap area to one of a plurality of trays provided in tray holders;
• Picking said mushroom from the conveyor belt by a picking robot;
• Based on the loading history of the assigned tray and the mushroom cap area of the concerned mushroom, placing the picked mushroom in a predetermined spot in said tray such as to load a tray according to a predetermined pattern;
• Removing a tray when it is loaded with a predetermined number of mushrooms and replacing the removed tray with an empty tray,
wherein the tray holders comprise a platform for holding a tray, characterized in that said platform is angled in view of the horizontal.

## Description

### Field of the Invention

The present invention concerns a packaging device for packing mushrooms, in particular for packing mushrooms from a mushroom conveyor belt into trays.

### Background to the Invention

Automated packaging of mushrooms from a conveyor belt into trays is known in the art. Generally devices for such automated packaging comprise a conveyor for delivering mushrooms, a mushroom inspection and classification unit, a picking robot, a tray holder and a control unit. The mushrooms are usually grown on beds arranged on racks. One such bed is in most cases upto 100 m long and about 75 to 150 cm wide. Harvesting of the mushrooms commonly done manually, whereby a picker harvests one single bed or one longitudinal half of a bed at once starting from one end of the bed and moving towards the opposite end in the longitudinal direction, harvesting the mushrooms that have reached a certain cap diameter.

The picker places the harvested mushrooms on a conveyor belt situated between him/her and the concerned bed. This conveyor belt usually comprises a belt of limited width wherein a single row of holes are provided, the row extending over the entire length of the conveyor belt and configured to receive the stem of a harvested mushroom. As such all mushrooms on the belt are oriented with their cap facing upwards. The stems of the mushrooms may shortened by the harvester prior to placing the mushroom on the conveyor belt or may be shortened in a dedicated automated unit positioned along the conveyor belt.

The conveyor belt extends from the beds where the mushrooms are harvested upto a packaging unit where the mushrooms are transferred from the conveyor belt to trays.

The transfer of the mushrooms from the conveyor belt to the trays is performed by a picking robot that picks the mushroom from the conveyor either by means of a suction pad or by a gripper and subsequently drops the mushroom in a tray.

While automated packaging of mushrooms saves labour costs, it is known to be a rather slow process as mushrooms have to be handled with care not to be bruised or otherwise damaged. Moreover, existing automated packaging devices for mushrooms have little to no control on positioning mushrooms in the tray, leading to a packing of the mushrooms with variable free spaces between the mushrooms and hence often large packing volume with mushrooms or mushroom caps positioned partially above a top edge of the trays and thus prone to being damaged.

From the above it is clear that there remains a market need for automated mushroom packaging devices addressing the above problems and allowing packing mushrooms at higher speed and with control of the placement of the mushrooms in a tray for optimized stacking to reduce the free space between mushrooms in the tray and hence allowing a more efficient packing without increasing the risk of damaging the packed mushrooms/

### Summary of the Invention

The present invention addresses the above market need and provides for a mushroom packaging device comprising a conveyor for delivering mushrooms, a mushroom inspection and classification unit, a picking robot, a tray holder comprising a platform for holding a tray and a control unit, characterized in that, said platform of the tray holder is angled in view of the horizontal.

The platform is preferably angled in view of the horizontal over an angle *α* of between 5° and 30°, preferably between 10° and 20°.

The conveyor belt preferably extends in a plane parallel to or substantially parallel to the horizontal.

According to a preferred embodiment, the mushroom packaging device according to any of the preceding claims, comprising two or more tray holders.

Optionally the mushroom packaging device comprises a tray transport system for transporting trays to and from the tray holder(s).

According to a preferred embodiment, the mushroom packaging device comprises a weighing unit for weighing trays filled with mushrooms, said weighing device provided in/on the tray transport system, downstream the tray holders.

The picking robot may be operated by the control unit on basis of input from the classification unit, which classification unit preferably comprises a visual inspection camera configured to determine a mushroom cap area.

The present invention also provides for a method of packaging mushrooms comprising the steps of:
- Determining a mushroom cap area of mushrooms on a conveyor belt;
- Assigning a mushroom, based on its cap area to one of a plurality of trays provided in tray holders;
- Picking said mushroom from the conveyor belt by a picking robot;
- Based on the loading history of the assigned tray and the mushroom cap area of the concerned mushroom, placing the picked mushroom in a predetermined spot in said tray such as to load a tray according to a predetermined pattern;
- Removing a tray when it is loaded with a predetermined number of mushrooms and replacing the removed tray with an empty tray,
wherein the tray holders comprise a platform for holding a tray, characterized in that said platform is angled in view of the horizontal.
he step of weighing a filled tray after removal from a tray holder and, in case of a measured weight outside a predetermined range, providing feedback to a control unit to increase or decrease the number of mushrooms with a certain cap area filled in a subsequent tray before removal of said tray from the concerned tray holder.

According to a preferred method, the mushrooms are picked from the conveyor belt in an order determined by an algorithm based on the time required for the picking robot to pick the mushroom and subsequently load the mushroom in an assigned tray.

The mushroom packaging devices preferably comprises at least five different tray holders configured for each holding a tray, whereby each tray is to be filled with mushrooms having a cap area within a predetermined range, each of the five trays receiving mushrooms of a different cap area range.

According to a preferred method, two or more trays to be filled with mushrooms having a cap area within a same predetermined range are simultaneously present over a period of time in two different tray holders of the device, said range determined on the relative frequency of mushrooms on the conveyor belt within that predetermined range.

### Brief Description of the Figures

Figure 1 schematically illustrates a mushroom packaging device according to the invention;
Figure 2 schematically illustrates a cross section according to line II-II in Fig 1.

### Detailed Description

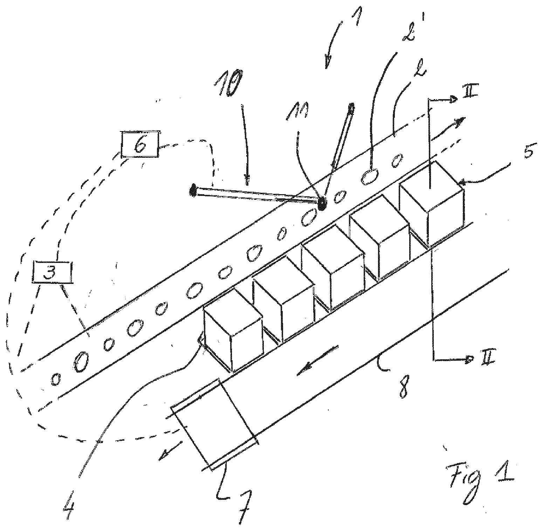

Fig. 1 illustrates a mushroom packaging device according to the present invention, comprising a conveyor for delivering mushrooms, a mushroom inspection and classification unit, a picking robot, at least one and in this case five tray holders, each comprising a platform for holding a tray, and a control unit. In the present embodiment, the mushroom packaging system also comprises a weighing unit.

The conveyor is in this case a guided belt of limited width of about 10 to 15 cm wherein a row of holes is provided. The holes form a single row extending in the longitudinal (transport) direction of the conveyor belt. The holes may vary in diameter to form an alternating pattern of larger and smaller holes. Each hole is configured to receive the stem of a mushroom, whereby larger mushrooms will fit with their stem in the larger holes, whereas smaller mushrooms fit with their stem in the smaller holes. The cap of the mushroom as such rests on the conveyor belt at the periphery of the concerned hole. The conveyor belt transports the mushrooms from cultivation beds (not shown) - where the mushrooms are allowed to grow and subsequently harvested - to the mushroom packaging device. The conveyor belt, or at least the part thereof at the mushroom packaging device according to the present invention preferably extends in a plane parallel to the horizontal, such that mushrooms rest on the conveyor belt by gravity.

The mushroom inspection and classification unit, in this case comprises a (3D) visual inspection camera that is directed towards the conveyor belt and allows for identifying mushrooms on the conveyor belt and measuring their cap area. The inspection and classification unit generates data comprising information regarding the position of a mushroom on the conveyor belt and the cap area of the concerned mushroom. Optionally, the 3D visual inspection camera also collects data regarding the quality of the mushrooms on the conveyor belt, such as color, shape, eventual bruises, or other damages of the mushroom cap, ....

The picking robot is either of the suction type comprising a suction pad that is configured to engage with the cap of a single mushroom and to create a pressure reduction to pick up the concerned mushroom, or can be of a claw type with a head comprising claws that can be opened and closed to grip around the cap of a mushroom for picking it up. The picking robot comprises arms or guides allowing it to move the suction pad or head along a part of the conveyor belt and towards trays in the tray holders. Preferably the picking robot is configured to pick mushrooms from the conveyor belt over a domain that situated downstream the conveyor belt in view of the mushroom inspection and classification unit, preferably at a distance corresponding to the distance of at least five subsequent holes in the conveyor belt. The domain in which the picking robot is configured to pick mushrooms from the conveyor belt preferably stretches over a distance corresponding to the distance of at least five subsequent holes in the conveyor belt. In other words, the picking robot is preferably configured to pick mushrooms from the conveyor belt in a domain situated at a distance downstream the mushroom inspection and classification unit, corresponding to the distance of 5 to 10 subsequent holes in the conveyor belt. Although one single picking robot is shown in the figures, it is possible to provide more than one picking robot along the conveyor belt of the mushroom packaging device.

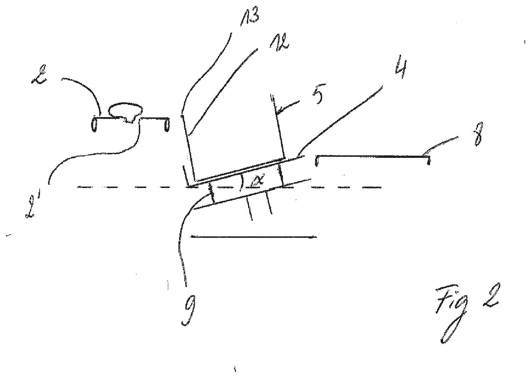

The tray holder(s) are preferably positioned very next to the conveyor belt to limit the travel distance of the picking robot when transferring mushrooms from the conveyor belt to trays provided in the tray holders. The tray holders main function is to hold trays to be filled with mushrooms and as such comprise a support, here further referred to as a platform for receiving trays thereon. The support or platform can be of any type or form as long as it offers good support to the trays and allows for maintaining the trays steady during the filling operation. In accordance with the present invention and as shown in Fig. 2, the platform of the trays is tilted in view of the horizontal, preferably over an angle *α* of between 5° and 30°, preferably between 10° and 20°, more preferably around 15°.

As illustrated in Fig. 2, the platforms of the tray holders are preferably angled towards the conveyor belt and more preferably are provided at a height such that an upper edge of the tray loaded thereon is approximately at the same level as the conveyor belt, this to keep the course of the picker robot for transferring mushrooms from the conveyor belt to the trays as short as possible. In case multiple sizes of trays are used with the mushroom picking device, the platform of the tray holders can be provided with a height adjustment means such as a spindle to adjust the position of the platform by moving it up or down in a direction normal to the plane of the platform.

Trays are preferably transported to and from the tray holders by a tray transport system, for example a tray conveyor belt. The actual loading and unloading of trays to the tray holders from the tray transport system can be achieved by pushers well known in the art.

The weighing device is preferably positioned downwards the tray transport system in view of the tray holders and allows weighing trays filled with mushrooms that are transported away from the tray holders. A single weighing device in this suffices to weigh filled trays originating from different tray holders and preferably comprises a checkweigher, configured for weighing a filled tray during movement of the tray.

The control unit is configured to receive input from the mushroom inspection and classification unit regarding the position of a mushroom on the conveyor belt and the cap area of the concerned mushroom, and from the optional weighing device regarding the weight of the filled trays. This input is used to steer the picking robot and tray transport system according to a method as explained in more detail below.

In a method according to the present invention, the mushroom inspection and classification unit allows to determine the position of a mushroom on the conveyor belt and its cap area. In case the mushroom inspection and classification unit is positioned sufficiently upstream the picking robot, as described supra, data of several mushrooms on the conveyor belt are provided to the control unit, prior to the mushrooms reaching the working domain of the picking robot. The control unit assigns each mushroom, based on its cap area to one of the trays provided on one of the tray holders, whereby each tray will receive mushrooms within a predetermined range of cap areas.

The control unit subsequently determines, based on a pre-loaded algorithm, in which order the mushrooms on the conveyor belt within the domain of the picking robot, can be loaded into the assigned trays in a minimum of time and steers the picking robot to transfer mushrooms from the conveyor belt to the assigned trays in that order. In this case, with one picking robot present in the mushroom packaging device, the mushrooms are transferred from the conveyor belt to the trays one by one.

The control unit also keeps track of the loading history of the assigned tray, such as to steer the picking robot to place a mushroom at a dedicated spot in the tray to which it is assigned. This allows filling the trays is a layered sequence, wherein the first mushroom is placed against a lowermost side wall of the tilted tray, thereby preventing that mushroom from rolling over. The next mushrooms will be placed next to it until a first row of mushrooms is provided against said lowermost side wall. Subsequently mushrooms are positioned in the tray in a second row against the first row and so on until a first layer of mushrooms fills the base of the tray. Subsequently a new layer can be laid in the same order as the first layer and so on until the tray is filled with a predetermined number of mushrooms and can be transported away from the tray holder to make place for a new empty tray.

Taking into account the loading history of a tray in said pre-loaded algorithm in the control unit, allows for an efficient and fast loading of the trays.

By choosing the range of cap areas to be loaded into one tray sufficiently narrow, one can determine the exact spot in a tray where a mushroom is to be placed quite exactly, without leaving voids between mushrooms. Therefore, it is preferred to divide the mushrooms based on their cap size in at least five different groups, for example XS, S, M, L and XL, and to provide at least one tray holder for each of these groups. To further increase efficiency of the mushroom packaging, more than one tray holder can be provided for one or more of said different groups, for example based on the relative frequency of mushrooms within one group present on the conveyor belt.

The mushrooms are preferably loaded in a tray according to a staggered pattern, with the stems of mushrooms of a higher layer, positioned between or on the caps of four mushrooms of a lower layer.

Once a tray is filled with a pre-determined number of mushrooms - the number depending on the range of cap areas of the mushrooms in that tray and the desired net weight of the mushrooms in the tray -, the trays are discharged from the tray holders and transported away therefrom by the tray transport system. Optionally, the trays can be transported though the weighing unit to determine whether the expected net weight of mushrooms is present in the tray or that it is too low or it exceeds the expected weight. In case the weight is either too low or too high, the weighing station is configured to send a signal to the control unit that will alter the number of mushrooms of the concerned type to be loaded in a single tray to meet achieve the expected weight in a next tray filled with mushrooms with the same cap area range.

The mushroom packaging device according to the present invention is preferably designed for filling trays with 100g, 150g, 200g, 250g, 300g, 350g, 400g, 450g, 500g etc. upto 1500g of mushrooms.

### Figure references

1. Mushroom packaging device
2. Conveyor
3. Mushroom classification unit
4. Tray holder
5. Tray
6. Control unit
7. Weighing unit
8. Tray transport system
9. Spindle
10. Picking robot
11. Suction cup
12. Lowermost side wall of tilted tray
13. Upper edge of tray

## Claims

1. A mushroom packaging device comprising a conveyor for delivering mushrooms, a mushroom inspection and classification unit, a picking robot, a tray holder comprising a platform for holding a tray and a control unit, **characterized in that**, said platform of the tray holder is angled in view of the horizontal.

2. The mushroom packaging device according to claim 1, wherein said platform is angled in view of the horizontal over an angle *α* of between 5° and 30°, preferably between 10° and 20°.

3. The mushroom packaging device according to claim 1 or 2, wherein said conveyor belt extends in a plane parallel to or substantially parallel to the horizontal.

4. The mushroom packaging device according to any of the preceding claims, comprising two or more tray holders.

5. The mushroom packaging device according to any of the preceding claims, comprising a tray transport system for transporting trays to and from the tray holder(s).

6. The mushroom packaging device according to claim 5, comprising a weighing unit for weighing trays filled with mushrooms, said weighing device provided in/on the tray transport system, downstream the tray holders.

7. The mushroom packaging device according to any of the preceding claims, wherein the picking robot is operated by the control unit on basis of input from the classification unit.

8. The mushroom packaging device according to any of the preceding claims, wherein the classification unit comprises a visual inspection camera configured to determine a mushroom cap area.

9. A method of packaging mushrooms comprising the steps of:
• Determining a mushroom cap area of mushrooms on a conveyor belt;
• Assigning a mushroom, based on its cap area to one of a plurality of trays provided in tray holders;
• Picking said mushroom from the conveyor belt by a picking robot;
• Based on the loading history of the assigned tray and the mushroom cap area of the concerned mushroom, placing the picked mushroom in a predetermined spot in said tray such as to load a tray according to a predetermined pattern;
• Removing a tray when it is loaded with a predetermined number of mushrooms and replacing the removed tray with an empty tray,
wherein the tray holders comprise a platform for holding a tray, **characterized in that** said platform is angled in view of the horizontal.

10. The method according to claim 9, comprising a step of weighing a filled tray after removal from a tray holder and, in case of a measured weight outside a predetermined range, providing feedback to a control unit to increase or decrease the number of mushrooms with a certain cap area filled in a subsequent tray before removal of said tray from the concerned tray holder.

11. The method according to claim 9 or 10, wherein the mushrooms are picked from the conveyor belt in an order determined by an algorithm based on the time required for the picking robot to pick the mushroom and subsequently load the mushroom in an assigned tray.

12. The method according to any of the preceding claims 9 to 11, comprising providing at least five trays at a time in different tray holders, and filling each tray with mushrooms having a cap area within a predetermined range, each of the five trays receiving mushrooms of a different cap area range.

13. The method according to any of the preceding claims 9 to 12, comprising providing two or more trays to be filled with mushrooms having a cap area within a same predetermined range, said range determined on the relative frequency of mushrooms on the conveyor belt within that predetermined range.
